# EUROPÄISCHE PATENTSCHRIFT

(11) **EP 2 845 768 B1**
(45) Veröffentlichungstag und Bekanntmachung des Hinweises auf die Patenterteilung: **06.04.2016**
(21) Anmeldenummer: 14001707.0
(22) Anmeldetag: 15.05.2014
(51) Int. Cl.: B60R 3/02, B61D 23/02

(54) **Klapptreppenkonstruktion für ein eine Einstiegstreppe aufweisendes Kraftfahrzeug**
Folding stair structure for a motor vehicle comprising entry steps
Construction de marches escamotables pour un véhicule automobile présentant un marchepied

(30) Priorität: 06.09.2013 DE 102013014906
(43) Veröffentlichungstag der Anmeldung: 11.03.2015
(73) Patentinhaber: MAN Truck & Bus AG, 80995 München (DE)
(72) Erfinder: Elsner, Thomas, 83278 Traunstein (DE)

(56) Entgegenhaltungen:
- US-A- 5 284 349
- US-A- 5 584 493
- US-B1- 6 460 915
- US-B1- 8 075 008

## Beschreibung

Die Erfindung betrifft eine Klapptreppenkonstruktion für ein eine Einstiegstreppe aufweisendes Kraftfahrzeug, insbesondere einen Omnibus, z.B. einen Reiseomnibus. Zudem betrifft die Erfindung ein Kraftfahrzeug, das mit einer erfindungsgemäßen Klapptreppenkonstruktion ausgestattet ist.

Ältere, kleinere und behinderte Menschen haben beim Ein- und Aussteigen in und aus Omnibussen oftmals Probleme, die erste Trittstufe der Einstiegstreppe der Omnibusse zu erreichen, die sich üblicherweise auf einer Höhe von ungefähr oder sogar mehr als 40 cm über Bodenniveau erstreckt. Aus US 5 584 493 A ist eine ein- und ausfahrbare Treppe, gemäß den Oberbegriff des Patentanspruchs 1, eines Lastkraftwagens bekannt. Aus der DE 42 29 606 A1 ist eine Trittplatte für einen Türeinstieg eines Omnibusses bekannt. Die Trittplatte ist schwenkbar an der Einstiegstreppe des Omnibusses gelagert und kann von einer eingeklappten Nichtgebrauchsstellung in eine ausgeklappte Gebrauchsstellung geschwenkt werden. Nachteilhaft an der Trittplatte ist z. B., dass sie im Gebrauchszustand nicht unter das Fahrzeugschwellerniveau ausklappen kann und darüber hinaus einen relativ aufwändigen Schwenkmechanismus erfordert. Als nachteilhaft kann z. B. ferner angesehen werden, dass bei eingeklappter Trittplatte der Höhenabstand zwischen der erste Trittstufe der Einstiegstreppe des Omnibusses und dem Straßenniveau relativ hoch ist und Fahrgäste somit nur sehr beschwerlich den Omnibus betreten können, wenn die Trittplatte eingeklappt ist. Somit ist das Ausklappen der Trittplatte sehr häufig erforderlich. Zum Stand der Technik ist ferner die US 6 460 915 B1 und die US 8 075 008 B1 zu nennen.

Eine Aufgabe der Erfindung ist es, eine verbesserte und/oder alternative Klapptreppenkonstruktion als Einstiegs- oder Ausstiegshilfe für ein eine Einstiegstreppe aufweisendes Kraftfahrzeug, insbesondere einen Omnibus, zu schaffen.

Diese Aufgabe kann mit den Merkmalen des Hauptanspruchs gelöst werden. Vorteilhafte Weiterbildungen können den Unteransprüchen entnommen werden.

Die Erfindung schafft eine Klapptreppenkonstruktion insbesondere als Einstiegserleichterung auf eine Einstiegstreppe eines Kraftfahrzeugs, vorzugsweise eines Omnibusses, z.B. eines Reiseomnibusses.

Die Klapptreppenkonstruktion umfasst die eigentliche Klapptreppe und eine Montageeinrichtung, mittels der die Klapptreppe an das Kraftfahrzeug montiert werden kann und um die die Klapptreppe zweckmäßig geschwenkt werden kann. Die Klapptreppe zeichnet sich insbesondere dadurch aus, dass sie zumindest zwei über einen Treppenstufenversatz miteinander verbundene Trittstufen umfasst.

Die Klapptreppe ist aus einem zweckmäßig zumindest in seiner Längsrichtung durchgehenden, insbesondere integralen und/oder einstückigen Flächenelement ausgeführt. Das Flächenelement bildet vorzugsweise die erste Trittstufe, die zweite Trittstufe und den Treppenstufenversatz aus. Das Flächenelement kann auch aus z. B. miteinander verbundenen, insbesondere verschweißten oder verklebten Flächenelementen ausgeführt sein. Das Flächenelement kann im Rahmen der Erfindung eine oder mehrere Aussparungen aufweisen und/oder zur Anti-Rutsch-Sicherung oberflächenstrukturiert sein.

Das Flächenelement kann gebogen oder gekantet sein und/oder ein Blechteil sein. Das Flächenelement hat vorzugsweise eine Stärke von kleiner oder gleich 8mm, 6mm oder 4mm.

Die Klapptreppe und/oder das Flächenelement ist vorzugsweise zu einer Z-Form geformt, insbesondere gekantet oder gebogen.

Eine Z-Form im Rahmen der Erfindung umfasst insbesondere Ausführungsformen, in denen die Trittstufen mit dem Treppenstufenversatz z. B. einen Winkel von 90° ± max. 45°, ± max. 30°, ± max. 25°, ± max. 20°, ± max. 15°, ± max. 10° oder ± max. 5° bilden.

Es ist möglich, dass die Kontur der Oberseite der Klapptreppe, insbesondere des Flächenelements, Z-förmig ausgeführt ist und die Kontur der Unterseite der Klapptreppe, insbesondere des Flächenelements, Z-förmig ausgeführt ist und somit zweckmäßig einander entsprechen.

Die Klapptreppe ist insbesondere zur zweckmäßig abschnittsweisen konturgetreuen Überlagerung der Einstiegstreppe ausgeführt, um dadurch vorzugsweise die Funktion zumindest zweier überlagerter Trittstufen der Einstiegstreppe im eingeschwenkten Zustand übernehmen zu können. Mit "konturgetreu" ist insbesondere ein im Wesentlichen gleicher, z. B. im Wesentlichen Z-förmiger Silhouetten-/Konturverlauf der Klapptreppe und der Einstiegstreppe gemeint, so dass die Klapptreppe und die Einstiegstreppe durchaus z. B. verschiedene Oberflächenstrukturen und/oder Gestaltungsmerkmale aufweisen können und dennoch als "konturgetreu" anzusehen sind. Im Rahmen der Erfindung sind natürlich ferner insbesondere Abweichungen zwischen der Klapptreppen-Kontur und der Einstiegstreppen-Kontur umfasst, die erforderlich sind, um den Klappvorgang der Klapptreppe ausführen zu können.

Bei einer besonders bevorzugten Ausführungsform weist eine erste Trittstufe eine erste Seite und eine zweite Seite auf, während eine zweite Trittstufe ebenso eine erste Seite und eine zweite Seite aufweist.

Die Klapptreppe ist vorzugsweise so ausgeführt, dass in einem ausgeschwenkten Zustand der Klapptreppe die erste Seite der ersten Trittstufe und die erste Seite der zweiten Trittstufe als Trittflächen dienen, zweckmäßig zur Einstiegserleichterung auf die Einstiegstreppe des Kraftfahrzeugs und/oder um die Einstiegstreppe in Höhe und Tiefe zu ergänzen.

Die Klapptreppe ist vorzugsweise so ausgeführt, dass in einem eingeschwenkten Zustand der Klapptreppe die zweite Seite der ersten Trittstufe und die zweite Seite der zweiten Trittstufe als Trittflächen dienen, zweckmäßig um die Funktion zweier überlagerter Trittstufen der Einstiegstreppe übernehmen zu können. Zudem liegen vorzugsweise die erste Seite der ersten Trittstufe und die erste Seite der zweiten Trittstufe auf der Einstiegstreppe auf.

Die Montageeinrichtung dient vorzugsweise zur festen und/oder dauerhaften Montage an das Kraftfahrzeug.

Es ist möglich, dass die Klapptreppe mittels der Montageeinrichtung um im Wesentlichen 180° schwenkbar ist, um von einem eingeschwenkten Zustand in einen ausgeschwenkten Zustand gebracht zu werden oder von einem ausgeschwenkten Zustand in einen eingeschwenkten Zustand gebracht zu werden. Die Klapptreppe kann z. B. durch eine Anlage in der Montageeinrichtung im um 180° ausgeschwenkten Zustand gehalten werden. Alternativ kann die Montageeinrichtung auf der Einstiegstreppe zurückversetzt sein, so dass sich die Klapptreppe auf der Einstiegstreppe abstützen kann, um im 180° ausgeschwenkten Zustand gehalten zu werden.

Es ist möglich, dass die Montageeinrichtung zumindest ein Scharnier, ein Scharnierband, ein Filmscharnier, etc. umfasst.

Die Montageeinrichtung ist vorzugsweise so ausgeführt und angeordnet, dass sie von Fahrgästen übertreten werden kann und zwar vorzugsweise ohne merkliche Behinderung oder Beeinträchtigung.

Die Klapptreppe, insbesondere das Flächenelement, kann seitlich außen Flanschabschnitte zur Stabilitätssteigerung aufweisen. Die Flanschabschnitte sind vorzugsweise aus dem zuvor geführten Flächenelement ausgebildet. Somit kann bei einer bevorzugten Ausführungsform das Flächenelement die erste Trittstufe, die zweite Trittstufe, den Treppenstufenversatz und die Flanschabschnitte ausbilden.

Vorzugsweise ist die Montageeinrichtung an einer Stirnkante einer Trittstufe der Klapptreppe montiert, vorzugsweise an der ersten Trittstufe.

Es ist möglich, dass die Klapptreppenkonstruktion einen Handlauf aufweist, der vorzugsweise aus dem Kraftfahrzeug ausschwenkbar ausgeführt ist.

Es ist möglich, dass der Handlauf über einen Kopplungsmechanismus mit der Klapptreppe, insbesondere der Montageeinrichtung, verbunden ist, um die Klapptreppe zumindest teilweise auszuschwenken, wenn der Handlauf ausgeschwenkt wird, vorzugsweise aus dem Kraftfahrzeug.

Der Kopplungsmechanismus kann als Hebel-Seil-Mechanismus oder Hebel-Gestänge-Mechanismus ausgeführt sein.

Die Klapptreppenkonstruktion ist vorzugsweise so ausgeführt, dass sie nachträglich an ein Kraftfahrzeug montiert werden kann. Die Klapptreppenkonstruktion stellt somit vorzugsweise eine Nachrüstkonstruktion dar.

Die Erfindung umfasst auch ein Kraftfahrzeug, vorzugsweise einen Omnibus, insbesondere einen Reiseomnibus, mit einer quasi üblichen Einstiegstreppe mit zumindest zwei über einen Treppenstufenversatz miteinander verbundenen Trittstufen. Das Kraftfahrzeug zeichnet sich insbesondere dadurch aus, dass es mit einer Klapptreppenkonstruktion wie hierin beschrieben ausgestattet ist.

Es ist möglich, dass die zweckmäßig Z-förmige Kontur der Klapptreppe der zweckmäßig Z-förmigen Kontur der Einstiegstreppe folgt, so dass die Klapptreppe im eingeschwenkten Zustand die Funktion zumindest zweier überlagerter Trittstufen der Einstiegstreppe übernehmen kann.

Die Klapptreppe stellt vorzugsweise eine konturgetreue Nachbildung der Einstiegstreppe dar, zweckmäßig zumindest in Bezug auf zumindest zwei Trittstufen der Einstiegstreppe.

Im eingeschwenkten Zustand der Klapptreppe kann die erste Seite der ersten Trittstufe und die erste Seite der zweiten Trittstufe auf der Einstiegstreppe aufliegen, während die zweite Seite der ersten Trittstufe und die zweite Seite der zweiten Trittstufe als Trittflächen dienen und die Funktion zumindest zweier Trittstufen der Einstiegstreppe übernehmen.

Im ausgeschwenkten Zustand kann die Klapptreppe die Einstiegstreppe freilegen. Zudem kann die erste Seite der ersten Trittstufe und die erste Seite der zweiten Trittstufe als Trittflächen zur Einstiegserleichterung auf die Einstiegstreppe dienen und/oder die Einstiegstreppe in Höhe und Tiefe ergänzen.

Die Klapptreppe übernimmt vorzugsweise im eingeschwenkten Zustand und im ausgeschwenkten Zustand eine Treppenfunktion und ist somit im eingeschwenkten Zustand und im ausgeschwenkten Zustand in Gebrauchsstellung.

Die Montageeinrichtung kann an die Einstiegstreppe z. B. geschraubt, geklebt oder geklemmt sein. Die Montageeinrichtung erstreckt sich vorzugsweise entlang einer vorderen, oberen Treppenstufenkante der vorzugsweise untersten Treppenstufe der Einstiegstreppe.

Zu erwähnen ist nochmals, dass im Rahmen der Erfindung insbesondere auch Ausführungsformen mit einer den Klappvorgang der Klapptreppe ermöglichenden Abweichung zwischen der Klapptreppen-Kontur und der Einstiegstreppen-Kontur umfasst sind.

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht einer Klapptreppenkonstruktion gemäß einer Ausführungsform der Erfindung in einem ausgeschwenkten Zustand,
- Figur 2: zeigt eine perspektivische Ansicht der Klapptreppenkonstruktion aus Figur 1 in einem eingeschwenkten Zustand,
- Figur 3: zeigt eine schematische Schnittansicht der Klapptreppenkonstruktion aus den Figuren 1 und 2,
- Figur 4: zeigt eine perspektivische Ansicht eines Kraftfahrzeugs mit einer Einstiegstreppe und einer ausgeschwenkten Klapptreppe gemäß den Figuren 1 bis 3,
- Figur 5: zeigt eine perspektivische Ansicht des Kraftfahrzeug aus Figur 4 mit einer eingeschwenkten Klapptreppe,
- Figur 6: zeigt eine perspektivische Ansicht des Kraftfahrzeugs aus den Figuren 4 und 5 mit einer eingeschwenkten Klapptreppe,
- Figur 7: zeigt eine Vorderansicht eines Kraftfahrzeugs mit einer Klapptreppenkonstruktion in einem ausgeschwenkten Zustand gemäß einer Ausführungsform der Erfindung,
- Figur 8: zeigt eine perspektivische Ansicht des Kraftfahrzeugs aus Figur 7 mit Weglassungen zur Illustration eines Handlauf-Klapptreppe-Kopplungsmechanismus, und
- Figur 9: zeigt eine perspektivische Ansicht des Kraftfahrzeugs aus den Figuren 7 und 8.

Die in den Figuren gezeigten Ausführungsformen stimmen teilweise überein, wobei ähnliche oder identische Teile mit den gleichen Bezugszeichen versehen sind, und zu deren Erläuterung auch auf die Beschreibung anderer Ausführungsformen verwiesen wird, um Wiederholungen zu vermeiden.

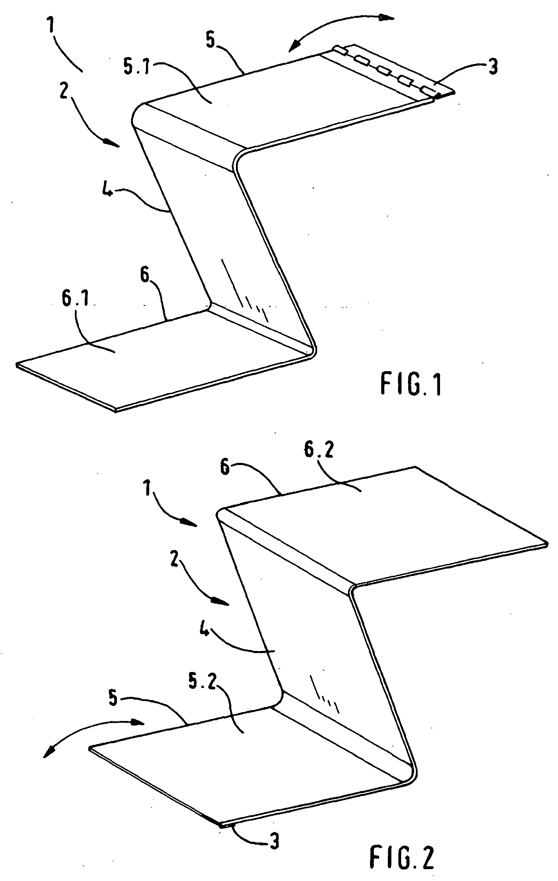

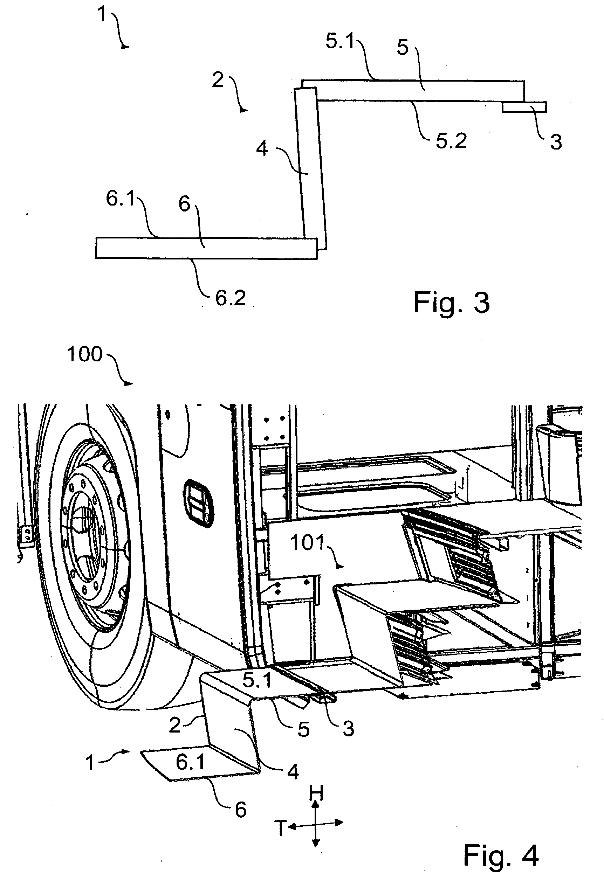

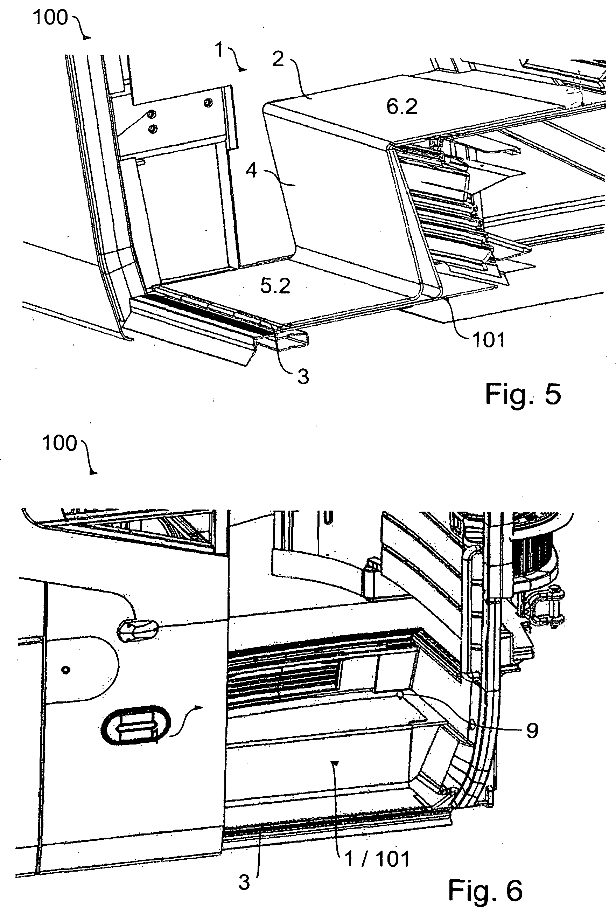

Figur 1 zeigt eine Klapptreppenkonstruktion 1 gemäß einer Ausführungsform der Erfindung in einem ausgeschwenkten Zustand, während Figur 2 die Klapptreppenkonstruktion 1 in einem eingeschwenkten Zustand zeigt und die Figur 3 die Klapptreppenkonstruktion 1 in einem ausgeschwenkten Zustand schematisch darstellt. Figur 4 zeigt die Klapptreppenkonstruktion 1 montiert an einem eine Einstiegstreppe 101 aufweisenden Omnibus 100 und in einem ausgeschwenkten Zustand. Die Figuren 5 und 6 zeigen die Klapptreppenkonstruktion 1 der Figur 4 montiert an dem Omnibus 100 und in einem eingeschwenkten Zustand.

Nachfolgend wird die Klapptreppenkonstruktion 1 unter Bezugnahme auf die Figuren 1 bis 6 beschrieben. Die Klapptreppenkonstruktion 1 umfasst die eigentliche Klapptreppe 2 und eine Montageeinrichtung 3, mittels der die Klapptreppe 2 an den Omnibus 100 montierbar ist und um die die Klapptreppe 2 vorzugsweise um im Wesentlichen 180° schwenkbar ist, was in den Figuren 1 und 2 schematisch durch die Doppelpfeile angedeutet ist.

Die Klapptreppe 2 umfasst zumindest zwei über einen Treppenstufenversatz 4 miteinander verbundene Trittstufen 5 und 6. Die erste Trittstufe 5 weist eine erste Seite 5.1 und eine zweite Seite 5.2 auf. Die zweite Trittstufe 6 weist eine erste Seite 6.1 und eine zweite Seite 6.2 auf.

Bezugnehmend auf die Figuren 1, 3 und 4 dienen in einem ausgeschwenkten Zustand der Klapptreppe 2 die erste Seite 5.1 der ersten Trittstufe 5 und die erste Seite 6.1 der zweiten Trittstufe 6 als Trittflächen, um die Einstiegstreppe 101 in Höhe H und Tiefe T zu ergänzen und so einem Fahrgast den Zutritt auf die Einstiegstreppe 101 zu erleichtern. Die übliche Einstiegshöhe von ungefähr 41cm kann dadurch erheblich reduziert werden.

Bezugnehmend auf die Figuren 2, 5 und 6 liegt die Klapptreppe 2 in einem eingeschwenkten Zustand auf der Einstiegstreppe 101 auf und übernimmt die Funktion zumindest zweier überlagerter Trittstufen der Einstiegstreppe 101. Die Klapptreppe 2 und die Einstiegstreppe 101 weisen eine Z-förmige Kontur auf. Die Klapptreppe 2 ist zur konturgetreuen Überlagerung zumindest zweier Trittstufen der Einstiegstreppe 101 ausgeführt, um so deren Funktion übernehmen zu können. Die Z-förmige Kontur der Klapptreppe 2 folgt der Z-förmigen Kontur der Einstiegstreppe 101. Insbesondere liegen in einem eingeklappten Zustand die erste Seite 5.1 der ersten Trittstufe 5 und die erste Seite 6.1 der zweiten Trittstufe 6 auf zwei Trittstufen der Einstiegstreppe 101 auf, während die zweite Seite 5.2 der ersten Trittstufe 5 und die zweite Seite 6.2 der zweiten Trittstufe 6 als Trittflächen zur Übernahme der Funktion der überlagerten Trittstufen der Einstiegstreppe 101 dienen.

Die Klapptreppe 2 übernimmt somit im eingeschwenkten Zustand und im ausgeschwenkten Zustand eine Trittstufen zur Verfügung stellende Treppenfunktion.

Die Klapptreppe 2 ist aus einem durchgehenden, zweckmäßig integralen Flächenelement hergestellt, das den Treppenstufenversatz 4, die erste Trittstufe 5 und die zweite Trittstufe 6 ausbildet. Das Flächenelement ist ein vorzugsweise ungefähr 4mm starkes gekantetes oder gebogenes Blechteil. Das Flächenelement und somit die Klapptreppe 2 ist Z-förmig ausgeführt, mit einer Z-förmigen Oberseiten-Kontur und einer Z-förmigen Unterseiten-Kontur. Das Flächenelement kann seitlich außen Flanschabschnitte (nicht dargestellt) zur Stabilitätssteigerung aufweisen, die sich entlang der ersten Trittstufe 5, der zweiten Trittstufe 6 und des Treppenstufenversatzes 4 erstrecken können. Ferner kann das Flächenelement z. B. eine oder mehrere Aussparungen aufweisen und/oder z. B. zur Anti-Rutsch-Sicherung oberflächenstrukturiert sein.

Die Montageeinrichtung 3 ist als Scharnierband ausgeführt, kann aber auch ein Filmscharnier sein. Das Scharnierband ist so ausgeführt und angeordnet, dass es sich zwischen einer Stirnkante der Klapptreppe 2 und einer Stirnkante der untersten Trittstufe der Einstiegstreppe 101 erstreckt.

In Figur 5 ist zu erkennen, dass die Kontur der Klapptreppe 2, insbesondere des Treppenstufenversatzes 4 so von der Kontur der Einstiegstreppe 101 abweicht, dass ein Klappvorgang der Klapptreppe 2 ermöglicht wird. Würde sich die Kontur der Klapptreppe 2 zu stark an die Kontur der Einstiegstreppe 101 anschmiegen, insbesondere im unteren Bereich des in Figur 5 gezeigten Treppenstufenversatzes 4, würde die Klapptreppe 2 während des Klappvorgangs an der Einstiegstreppe 101 anstoßen und blockieren, so dass ein Klappvorgang nicht möglich wäre.

In Figur 6 ist ferner ein an der Klapptreppe 2 ausgebildetes Griffteil ausgebildet, zum manuellen Aus- und Einschwenken der Klapptreppe 2. In einer nicht gezeigten Ausführungsform kann das Griffteil auch z. B. mit einer Z-Verprägung in einem Eckbereich der Klapptreppe 2 angeformt sein.

Zu erwähnen ist noch, dass die Klapptreppe 2 durch eine Anlage in der Montageeinrichtung 3 im ausgeklappten Zustand gehalten werden kann, um ein unerwünschtes Weiterschwenken zu vermeiden. Alternativ kann die Montageeinrichtung 3 auf der Einstiegstreppe 101 zurückversetzt sein, so dass sich die Klapptreppe 2 auf der Einstiegstreppe 101 abstützen kann, um ein unerwünschtes Weiterschwenken zu vermeiden.

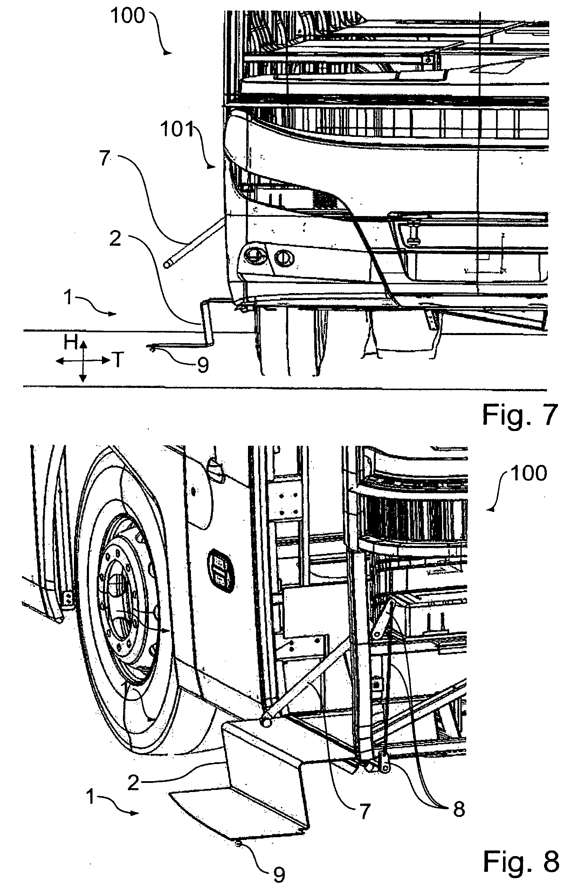

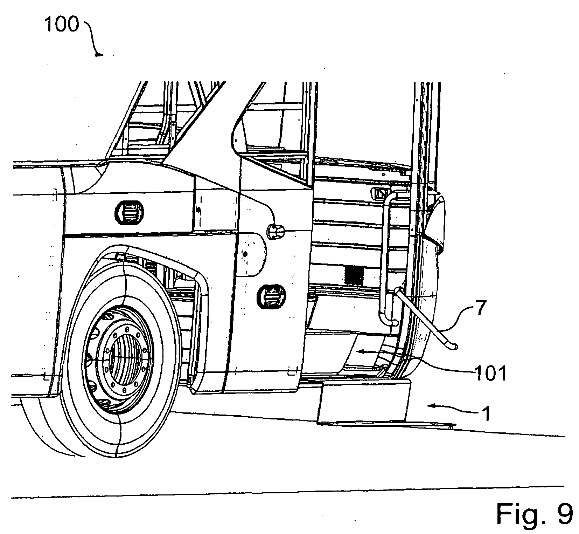

Figur 7 zeigt eine Vorderansicht eines Omnibusses 100 mit einer in Figur 7 nicht direkt zu sehenden Einstiegstreppe 101 und einer Klapptreppenkonstruktion 1 im ausgeschwenkten Zustand. Figuren 8 zeigt eine perspektivische Ansicht des Omnibusses 100 aus Figur 7, mit Weglassungen, um einen Kopplungsmechanismus 8 zwischen einem Handlauf 7 und der Klapptreppe 2, insbesondere der Montageeinrichtung 3, erkennen zu können. Figur 9 zeigt eine perspektivische Ansicht des Omnibusses 100 aus den Figuren 7 und 8 von schräg hinten.

Unter Bezugnahme auf die Figuren 7 bis 9 ist der Handlauf 7 aus dem Omnibus 100 ausschwenkbar. Der Handlauf 7 ist über den Kopplungsmechanismus 8 so mit der Klapptreppe 2 verbunden, dass die Klapptreppe 2 zumindest teilweise ebenfalls ausgeschwenkt wird, wenn der Handlauf 7 zweckmäßig aus dem Omnibus 100 ausgeschwenkt wird. Der Kopplungsmechanismus 8 kann z. B. als Hebel-Seil- oder Hebel-Gestänge-Mechanismus ausgeführt sein.

### Bezugszeichenliste

- 1: Klapptreppenkonstruktion
- 2: Klapptreppe
- 3: Montageeinrichtung
- 4: Treppenstufenversatz
- 5: erste Trittstufe
- 5.1: erste Seite
- 5.2: zweite Seite
- 6: zweite Trittstufe
- 6.1: erste Seite
- 6.2: zweite Seite
- 7: Handlauf
- 8: Kopplungsmechanismus
- 9: Griff
- 100: Kraftfahrzeug, insbesondere Omnibus
- 101: Einstiegstreppe
- T: Tiefe
- H: Höhe

## Patentansprüche

1. Klapptreppenkonstruktion (1) für ein eine Einstiegstreppe (101) aufweisendes Kraftfahrzeug (100), vorzugsweise einen Omnibus, mit:
- einer Klapptreppe (2), und
- einer Montageeinrichtung (3), mittels der die Klapptreppe (2) an das Kraftfahrzeug (100) montierbar ist und um die die Klapptreppe (2) vorzugsweise schwenkbar ist, wobei die Klapptreppe (2) zumindest zwei über einen Treppenstufenversatz (4) miteinander verbundene Trittstufen (5, 6) umfasst, **dadurch gekennzeichnet, dass**
die Klapptreppe (2) aus einem durchgehenden Flächenelement ausgeführt ist und das Flächenelement die erste Trittstufe (5), die zweite Trittstufe (6) und den Treppenstufenversatz (4) ausbildet, und/oder
die Klapptreppe (2) zumindest zwei über einen Treppenstufenversatz (4) miteinander verbundene Trittstufen (5, 6) umfasst, wovon eine erste Trittstufe (5) eine erste Seite (5.1) und eine zweite Seite (5.2) aufweist und eine zweite Trittstufe (6) eine erste Seite (6.1) und eine zweite Seite (6.2) aufweist und in einem ausgeschwenkten Zustand der Klapptreppe (2) die erste Seite (5.1) der ersten Trittstufe (5) und die erste Seite (6.1) der zweiten Trittstufe (6) als Trittflächen ausgeführt sind und in einem eingeschwenkten Zustand der Klapptreppe (2) die zweite Seite (5.2) der ersten Trittstufe (5) und die zweite Seite (6.2) der zweiten Trittstufe (6) als Trittflächen ausgeführt sind.

2. Klapptreppenkonstruktion (1) nach Anspruch 1, **dadurch gekennzeichnet, dass** das Flächenelement gebogen oder gekantet ist und/oder ein Blechteil ist.

3. Klapptreppenkonstruktion (1) nach einem der vorhergehenden Ansprüche, **dadurch gekennzeichnet, dass** die Klapptreppe (2) und/oder das Flächenelement Z-förmig ausgeführt ist.

4. Klapptreppenkonstruktion (1) nach einem der vorhergehenden Ansprüche, **dadurch gekennzeichnet, dass** die Kontur der Oberseite der Klapptreppe (2) Z-förmig ausgeführt ist und die Kontur der Unterseite der Klapptreppe (2) Z-förmig ausgeführt ist.

5. Klapptreppenkonstruktion (1) nach einem der vorhergehenden Ansprüche, **dadurch gekennzeichnet, dass** die Klapptreppe (2) zur konturgetreuen Überlagerung der Einstiegstreppe (101) ausgeführt ist, um im eingeschwenkten Zustand die Funktion zumindest zweier überlagerter Trittstufen der Einstiegstreppe (101) übernehmen zu können.

6. Klapptreppenkonstruktion (1) nach einem der vorhergehenden Ansprüche, **dadurch gekennzeichnet, dass** die Montageeinrichtung (3) zur festen, dauerhaften Montage an das Kraftfahrzeug (100) ausgeführt ist.

7. Klapptreppenkonstruktion (1) nach einem der vorhergehenden Ansprüche, **dadurch gekennzeichnet, dass** die Klapptreppe (2) mittels der Montageeinrichtung (3) um im Wesentlichen 180° schwenkbar ist, um von einem eingeschwenkten Zustand in einen ausgeschwenkten Zustand gebracht zu werden oder umgekehrt.

8. Klapptreppenkonstruktion (1) nach einem der vorhergehenden Ansprüche, **dadurch gekennzeichnet, dass** die Montageeinrichtung (3) zumindest ein Scharnier umfasst, vorzugsweise einzelne Scharniere, ein Scharnierband oder ein Filmscharnier.

9. Klapptreppenkonstruktion (1) nach einem der vorhergehenden Ansprüche, **dadurch gekennzeichnet, dass** die Klapptreppe (2) seitlich außen Flanschabschnitte aufweist, die sich vorzugsweise entlang der ersten Trittstufe (5), der zweiten Trittstufe (6) und des Treppenstufenversatz (4) erstrecken.

10. Klapptreppenkonstruktion (1) nach einem der vorhergehenden Ansprüche, **dadurch gekennzeichnet, dass** sich die Montageeinrichtung (3) entlang einer Trittstufen-Stirnkante erstreckt.

11. Klapptreppenkonstruktion (1) nach einem der vorhergehenden Ansprüche, **dadurch gekennzeichnet, dass** die Klapptreppenkonstruktion (1) einen aus dem Kraftfahrzeug ausschwenkbaren Handlauf (7) umfasst.

12. Klapptreppenkonstruktion (1) nach Anspruch 11, **dadurch gekennzeichnet, dass** der Handlauf (7) über einen Kopplungsmechanismus (8) mit der Klapptreppe (2) verbindbar ist und der Handlauf (7) mittels des Kopplungsmechanismus (8) die Klapptreppe (2) zumindest teilweise ausschwenkt, wenn er ausgeschwenkt wird.

13. Kraftfahrzeug (100), vorzugsweise Omnibus, mit:
- einer Einstiegstreppe (101) mit zumindest zwei über einen Treppenstufenversatz miteinander verbundenen Trittstufen, **gekennzeichnet durch** eine Klapptreppenkonstruktion (1) nach einem der vorhergehenden Ansprüchen.

14. Kraftfahrzeug (100) nach Anspruch 13, **dadurch gekennzeichnet, dass** die Kontur der Klapptreppe (2) der Kontur der Einstiegstreppe (101) folgt, um die Funktion zumindest zweier Trittstufen der Einstiegstreppe (101) übernehmen zu können.

15. Kraftfahrzeug (100) nach Anspruch 13 oder 14 **dadurch gekennzeichnet, dass** die Klapptreppe (2) im eingeschwenkten Zustand auf der Einstiegstreppe (101) aufliegt, während die zweite Seite (5.2) der ersten Trittstufe (5) und die zweite Seite (6.2) der zweiten Trittstufe (6) als Trittflächen dienen und die Funktion zumindest zweier Trittstufen der Einstiegstreppe (101) übernehmen.

16. Kraftfahrzeug (100) nach einem der Ansprüche 13 bis 15, **dadurch gekennzeichnet, dass** die Klapptreppe (2) in einem ausgeschwenkten Zustand die Einstiegstreppe (101) freilegt und die Einstiegstreppe (101) in Höhe (H) und Tiefe (T) ergänzt.

17. Kraftfahrzeug (100) nach einem der Ansprüche 13 bis 16, **dadurch gekennzeichnet, dass** die Montageeinrichtung (3) zwischen einer Klapptreppen-Stirnkante und Einstiegstreppen-Stirnkante angeordnet ist.

## Claims

1. A folding step construction (1) for a motor vehicle (100), preferably an omnibus, having entry steps (101), comprising:
- a folding step (2) and
- a mounting device (3) by means of which the folding step (2) is able to be mounted on the motor vehicle (100) and about which the folding step (2) is preferably able to be pivoted, wherein the folding step (2) comprises at least two steps (5, 6) connected together via a riser (4), **characterized in that**
the folding step (2) is designed from a continuous planar element and the planar element forms the first step (5), the second step (6) and the riser (4), and/or
the folding step (2) comprises at least two steps (5, 6) connected together via a riser (4), a first step (5) thereof having a first face (5.1) and a second face (5.2), and a second step (6) thereof having a first face (6.1) and a second face (6.2) and in a pivoted-out state of the folding step (2) the first face (5.1) of the first step (5) and the first face (6.1) of the second step (6) are designed as step surfaces and in a pivoted-in state of the folding step (2) the second face (5.2) of the first step (5) and the second face (6.2) of the second step (6) are designed as step surfaces.

2. The folding step construction (1) according to Claim 1, **characterized in that** the planar element is curved or angled and/or is a sheet metal part.

3. The folding step construction (1) according to one of the preceding claims, **characterized in that** the folding step (2) and/or the planar element are designed to be Z-shaped.

4. The folding step construction (1) according to one of the preceding claims, **characterized in that** the contour of the upper face of the folding step (2) is designed to be Z-shaped and the contour of the lower face of the folding steps (2) is designed to be Z-shaped.

5. The folding step construction (1) according to one of the preceding claims, **characterized in that** the folding step (2) is designed to be superimposed on the entry steps (101) in a manner which is aligned in terms of contour in order to be able to undertake the function of at least two superimposed steps of the entry steps (101) in the pivoted-in state.

6. The folding step construction (1) according to one of the preceding claims, **characterized in that** the mounting device (3) is designed for fixed, permanent mounting on the motor vehicle (100).

7. The folding step construction (1) according to one of the preceding claims, **characterized in that** the folding step (2) is pivotable by means of the mounting device (3) by substantially 180° in order to be moved from a pivoted-in state into a pivoted-out state or vice versa.

8. The folding step construction (1) according to one of the preceding claims, **characterized in that** the mounting device (3) comprises at least one hinge, preferably individual hinges, a joint hinge or a film hinge.

9. The folding step construction (1) according to one of the preceding claims, **characterized in that** the folding step (2) has flange portions laterally on the outside, said flange portions preferably extending along the first step (5), the second step (6) and the riser (4).

10. The folding step construction (1) according to one of the preceding claims, **characterized in that** the mounting device (3) extends along a front edge of the steps.

11. The folding step construction (1) according to one of the preceding claims, **characterized in that** the folding step construction (1) comprises a handrail (7) which is able to be pivoted out from the motor vehicle.

12. The folding step construction (1) according to Claim 11, **characterized in that** the handrail (7) is able to be connected to the folding step (2) via a coupling mechanism (8) and the handrail (7) at least partially pivots out the folding step (2) by means of the coupling mechanism (8) when it is pivoted out.

13. A motor vehicle (100), preferably an omnibus, comprising:
- entry steps (101) having at least two steps connected together via a riser, **characterized by** a folding step construction (1) according to one of the preceding claims.

14. The motor vehicle (100) according to Claim 13, **characterized in that** the contour of the folding step (2) follows the contour of the entry steps (101) in order to be able to undertake the function of at least two steps of the entry steps (101).

15. The motor vehicle (100) according to Claim 13 or 14, **characterized in that** in the pivoted-in state the folding step (2) bears against the entry steps (101), whilst the second face (5.2) of the first step (5) and the second face (6.2) of the second step (6) serve as step surfaces and undertake the function of at least two steps of the entry steps (101).

16. The motor vehicle (100) according to one of Claims 13 to 15, **characterized in that** in a pivoted-out state the folding step (2) exposes the entry steps (101) and increases the height (H) and depth (T) of the entry steps (101).

17. The motor vehicle (100) according to one of Claims 13 to 16, **characterized in that** the mounting device (3) is arranged between a folding step front edge and the front edge of the entry steps.

## Revendications

1. Construction d'escalier escamotable (1) pour un véhicule automobile (100) présentant un marchepied (101), de préférence un omnibus, comprenant :
- un escalier escamotable (2) et
- un dispositif de montage (3) au moyen duquel l'escalier escamotable (2) peut être monté sur le véhicule automobile (100) et autour duquel l'escalier escamotable (2) peut de préférence pivoter, l'escalier escamotable (2) comprenant au moins deux marches (5, 6) connectées l'une à l'autre par le biais d'une contremarche (4),
**caractérisée en ce que**
l'escalier escamotable (2) est réalisé à partir d'un élément de surface continu et l'élément de surface constitue la première marche (5), la deuxième marche (6) et la contremarche (4), et/ou l'escalier escamotable (2) comprend au moins deux marches (5, 6) connectées l'une à l'autre par le biais d'une contremarche (4), dont une première marche (5) présente une première face (5.1) et une deuxième face (5.2) et une deuxième marche (6) présente une première face (6.1) et une deuxième face (6.2) et, dans un état sorti par pivotement de l'escalier escamotable (2), la première face (5.1) de la première marche (5) et la première face (6.1) de la deuxième marche (6) sont réalisées sous forme de surfaces piétinables, et dans un état replié de l'escalier escamotable (2), la deuxième face (5.2) de la première marche (5) et la deuxième face (6.2) de la deuxième marche (6) sont réalisées sous forme de surfaces piétinables.

2. Construction d'escalier escamotable (1) selon la revendication 1, **caractérisée en ce que** l'élément de surface est cintré ou plié et/ou est une pièce en tôle.

3. Construction d'escalier escamotable (1) selon l'une quelconque des revendications précédentes, **caractérisée en ce que** l'escalier escamotable (2) et/ou l'élément de surface sont réalisés en forme de Z.

4. Construction d'escalier escamotable (1) selon l'une quelconque des revendications précédentes, **caractérisée en ce que** le contour du côté supérieur de l'escalier escamotable (2) est réalisé en forme de Z et le contour du côté inférieur de l'escalier escamotable (2) est réalisé en forme de Z.

5. Construction d'escalier escamotable (1) selon l'une quelconque des revendications précédentes, **caractérisée en ce que** l'escalier escamotable (2) est réalisé de manière à se superposer par son contour au contour du marchepied (101), afin de pouvoir assurer, dans l'état replié, la fonction d'au moins deux marches superposées du marchepied (101).

6. Construction d'escalier escamotable (1) selon l'une quelconque des revendications précédentes, **caractérisée en ce que** le dispositif de montage (3) est réalisé en vue du montage fixe et durable au véhicule automobile (100).

7. Construction d'escalier escamotable (1) selon l'une quelconque des revendications précédentes, **caractérisée en ce que** l'escalier escamotable (2) peut pivoter essentiellement de 180° au moyen du dispositif de montage (3), afin d'être amené depuis un état replié dans un état sorti par pivotement ou inversement.

8. Construction d'escalier escamotable (1) selon l'une quelconque des revendications précédentes, **caractérisée en ce que** le dispositif de montage (3) comprend au moins une charnière, de préférence des charnières individuelles, une bande de charnière ou une charnière à film.

9. Construction d'escalier escamotable (1) selon l'une quelconque des revendications précédentes, **caractérisée en ce que** l'escalier escamotable (2) présente des portions de brides latéralement à l'extérieur, lesquelles s'étendent de préférence le long de la première marche (5), de la deuxième marche (6) et de la contremarche (4).

10. Construction d'escalier escamotable (1) selon l'une quelconque des revendications précédentes, **caractérisée en ce que** le dispositif de montage (3) s'étend le long d'un bord frontal de marche.

11. Construction d'escalier escamotable (1) selon l'une quelconque des revendications précédentes, **caractérisée en ce que** la construction d'escalier escamotable (1) comprend une main courante (7) pouvant être sortie par pivotement hors du véhicule automobile.

12. Construction d'escalier escamotable (1) selon la revendication 11, **caractérisée en ce que** la main courante (7) peut être connectée à l'escalier escamotable (2) par un mécanisme d'accouplement (8), et la main courante (7) sort par pivotement au moins partiellement l'escalier escamotable (2) au moyen du mécanisme d'accouplement (8) lorsqu'elle est sortie par pivotement.

13. Véhicule automobile (100), de préférence omnibus, comprenant :
- un marchepied (101) comprenant au moins deux marches connectées l'une à l'autre par le biais d'une contremarche, **caractérisé par** une construction d'escalier escamotable (1) selon l'une quelconque des revendications précédentes.

14. Véhicule automobile (100) selon la revendication 13, **caractérisé en ce que** le contour de l'escalier escamotable (2) suit le contour du marchepied (101) afin de pouvoir assurer la fonction d'au moins deux marches du marchepied (101).

15. Véhicule automobile (100) selon la revendication 13 ou 14, **caractérisé en ce que** l'escalier escamotable (2) repose sur le marchepied (101) dans l'état replié, tandis que la deuxième face (5.2) de la première marche (5) et la deuxième face (6.2) de la deuxième marche (6) servent de surfaces piétinables et assurent la fonction d'au moins deux marches du marchepied (101).

16. Véhicule automobile (100) selon l'une quelconque des revendications 13 à 15, **caractérisé en ce que** l'escalier escamotable (2), dans un état sorti par pivotement, expose le marchepied (101) et complète le marchepied (101) en hauteur (H) et en profondeur (T).

17. Véhicule automobile (100) selon l'une quelconque des revendications 13 à 16, **caractérisé en ce que** le dispositif de montage (3) est disposé entre un bord frontal de l'escalier escamotable et un bord frontal du marchepied.
